(19) **Europäisches Patentamt**

**European Patent Office**

**Office européen des brevets**

(11) Publication number: **0 253 652 B1**

(12) **EUROPEAN PATENT SPECIFICATION**

(45) Date of publication of patent specification:
19.06.91 Bulletin 91/25

(51) Int. Cl.⁵: **G06F 15/20**

(21) Application number: **87306269.9**

(22) Date of filing: **15.07.87**

(54) Word processor.

(30) Priority: **15.07.86 JP 165773/86**

(43) Date of publication of application:
**20.01.88 Bulletin 88/03**

(45) Publication of the grant of the patent:
**19.06.91 Bulletin 91/25**

(84) Designated Contracting States:
**DE FR GB IT**

(56) References cited:
**EP-A- 0 165 442**
**US-A- 4 240 758**
**US-A- 4 587 631**
**IBM TECHNICAL DISCLOSURE BULLETIN,
vol. 26, no. 4, September 1983, pages
1779-1780, New York, US; W.A. KUECKER et
al.: "Carry-over-format bypass"**

(73) Proprietor: **BROTHER KOGYO KABUSHIKI
KAISHA
35, 9-chome, Horita-dori Mizuho-ku
Nagoya-shi, Aichi-ken (JP)**

(72) Inventor: **Kawakami, Yasushi
20-1, Yagoto-fujimigaoka Tenpaku-cho
Showa-ku
Nagoya-shi Aichi-ken (JP)**
Inventor: **Obata, Fukue
Meito-suginoki 201 Marunouchi 200 Mochifuku
Yokkaichi-shi Mie-ken (JP)**
Inventor: **Makihara, Kayoko
33-5, Minami-tsuji Katahara-cho
Kamagori-shi Aichi-ken (JP)**

(74) Representative: **Senior, Alan Murray
J.A. KEMP & CO 14 South Square Gray's Inn
London WC1R 5EU (GB)**

## Description

This invention relates to a word processor and more particularly to a format setting means thereof for changing format during text editing (In this specification, "text editing" includes text creation).

In conventional word processors, the change of the format during editing a text or so on the word processor has been accomplished in a manner that, after moving the cursor to the position at which the change should start (change start position), the format setting mode is entered to change the format, then the mode is escaped so that the character data following the cursor position is reformed according to the newly set format.

With the above prior word processors, for changing the format during editing operation, it has been necessary to first move the cursor to the change start position, then entering the format setting mode. Also, when the format set mode is escaped after setting the new format, reforming operation takes place according to the new format however, the cursor remains positioned at the beginning of the reformed character data group so that the cursor has to be moved to the edit restart position, resulting in an unsmooth restart of text editing operation.

IBM Technical Disclosure Bulletin Volume 26, No 4, September 1983, pages 1779 and 1780, on which the prior art portion of claim 1 is based, discloses a word processor which suffers a similar disadvantage in that reformatting needs to be carried out at the cursor address at the start of a segment of text.

It is an object of the invention, as defined in claim 1, to provide an improved word processor in which the cursor need not be moved to the position at which the change of the format should start, and instead, the format change can take place from the beginning of character data group when the format change operation is carried out at any desired position existing within the group.

With the word processor as above constructed, when the format is set at an arbitrary position within the text, means operate to apply the newly set format from the beginning of the character data group in which the above arbitrary position exists, and at least the whole character data from the beginning of the group is then automatically reformed according to the newly set format. As described later, once the need for the new format has passed, the operator needs simply to press a cancel key to restore the original format to that and succeeding character groups or segments of text.

Figure 1 is a perspective external view of the word processor embodying the invention ;

Figure 2 is a plan view of the keyboard section of the word processor shown in Figure 1 ;

Figure 3 is a block diagram of the electric circuit installed within the word processor shown in Fig. 1 ;

Figs. 4 (1) through (3) are flow charts showing the process for format change ;

Fig. 5 is an illustrative view of the CRT screen display before reforming ; and

Fig. 6 is a view similar to Fig. 5 showing the CRT screen display after reforming.

A preferred embodiment of the invention is now described with reference to the accompanying drawings.

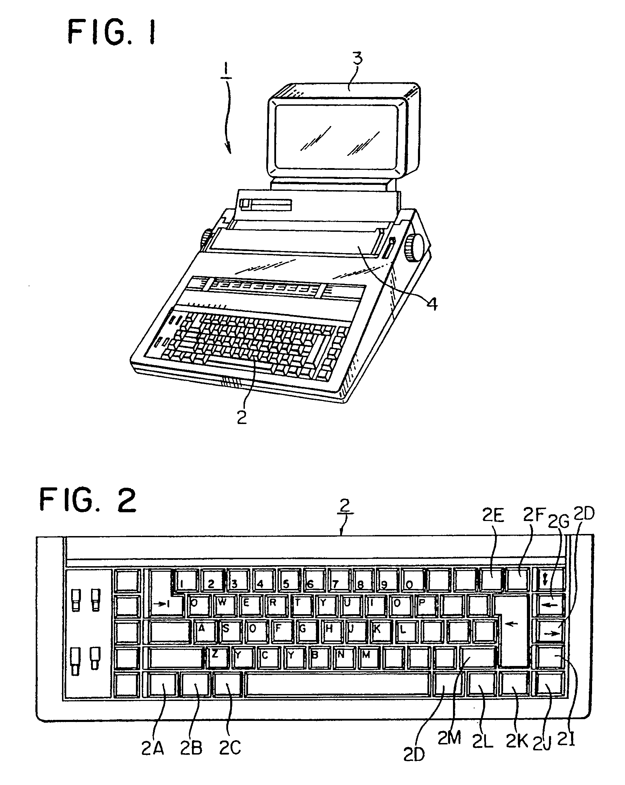

Fig. 1 is a perspective external view of the word processor 1 which comprises a keyboard 2 to be operated when setting various modes and inputting character data, a display section 3 provided with a CRT for display of the characters and symbols input through the keyboard 2 and stored in a memory device installed in the word processor 1, and printer section 4 for printing out the characters and the like stored in the memory device.

Fig. 2 is a plan view showing the detail of the keyboard 2 with a layout of various function keys and character keys. The keys 2A, 2B, 2C, 2D, 2E, 2F, 2G, 2H, 2I, 2J, 2K, 2L and 2M shown here will be described later in detail.

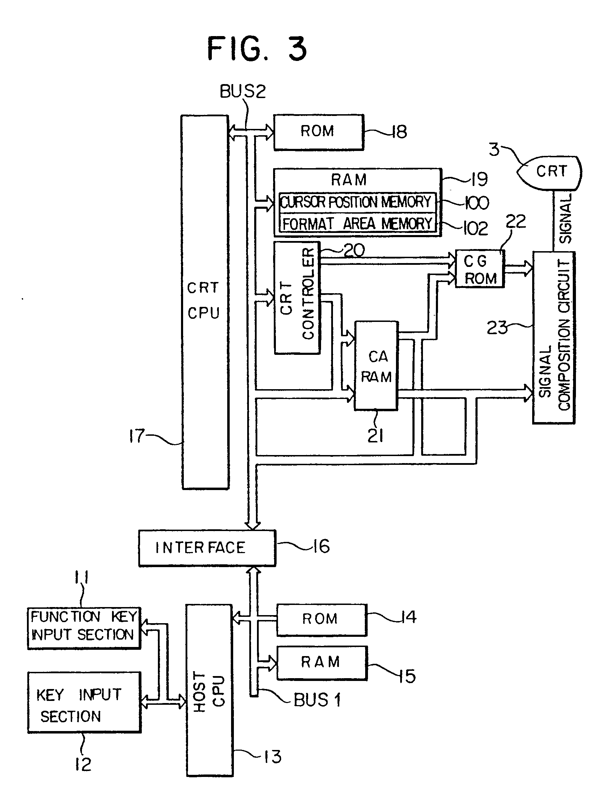

Fig. 3 shows a block diagram of the electrical circuit of the word processor 1. As shown in Fig. 3, the function keys on the keyboard 2 are connected to the function key input section 11 and the character keys to the key input section 12. The function key input section 11 and the key input section 12 serve as interface between the function and character keys and a host computer 13. Connected to the host computer 13 via bus line BUS1 are a read only memory (ROM) 14 and a random access memory (RAM) 15.

The general control program for the word processor 1 in stored in the ROM 14, while the RAM 15 contains therein the function data and character data given by operating the keyboard 2.

The host computer 13 is connected to a CRT control computer 17 to control the display (CRT) 3 through the interface circuit 16. Connected to the CRT control computer 17 via bus line BUB2 are a ROM 18 and RAM 19 and also a CRT controller 20. The ROM 18 stores therein the control program for controlling the CRT 3. The RAM 19 temporarily stores a variety of data for controlling the CRT 3 and is provided with a cursor current position memory 100 to keep the current position of the cursor in memory and a format area memory 102 which keeps the range of the format area in memory. The CRT controller 20 is connected at its output to a character attribute random-access-memory (CARAM) 21 which keeps in memory such attribute data as charactere, underline and boldface. There is further provided a signal composition circuit 23 with which, in response to the output command from the CRT controller 20, the data read from the CARAM 21 and the data read from the character generator read-only-memory (CGROM) 22 are composed to output the display data onto the display 3.

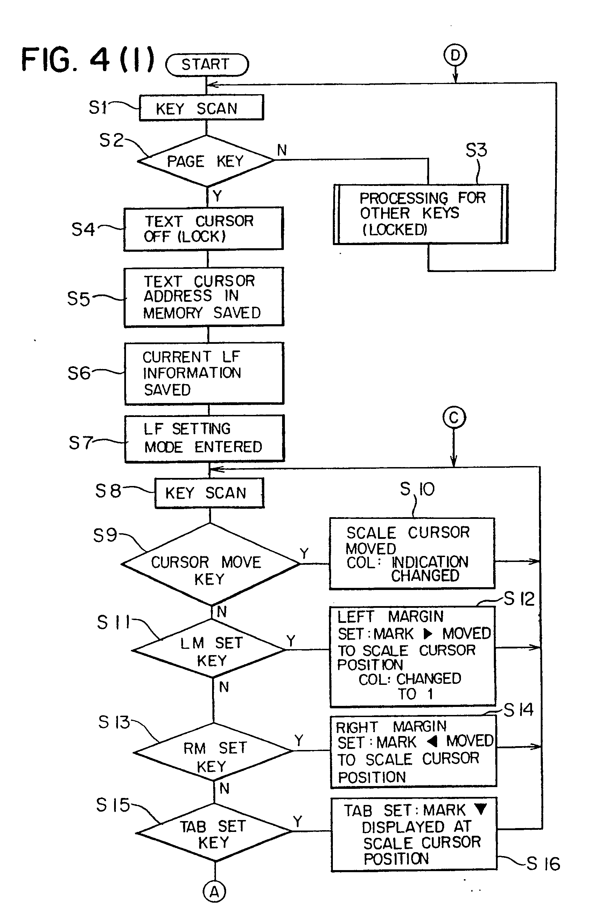

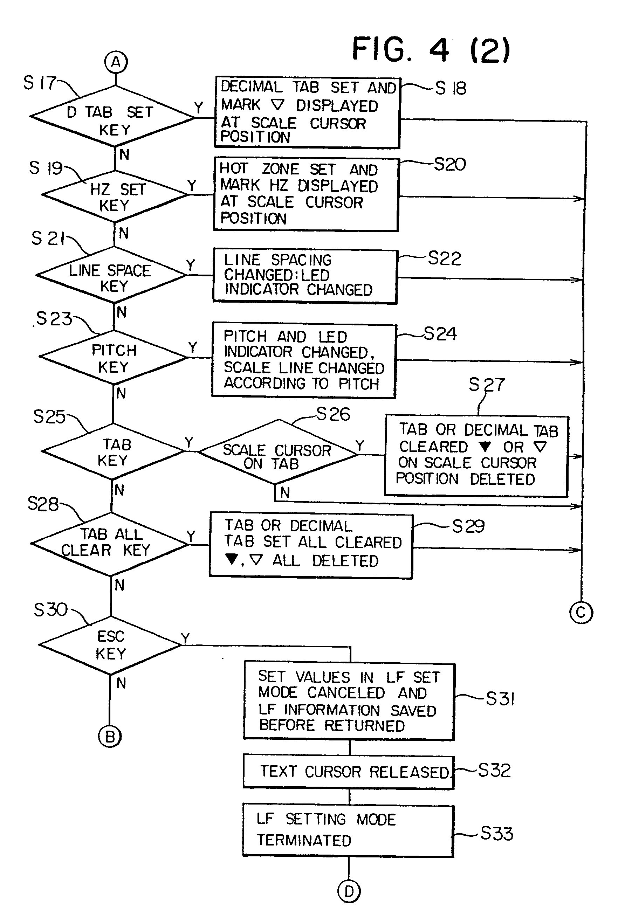

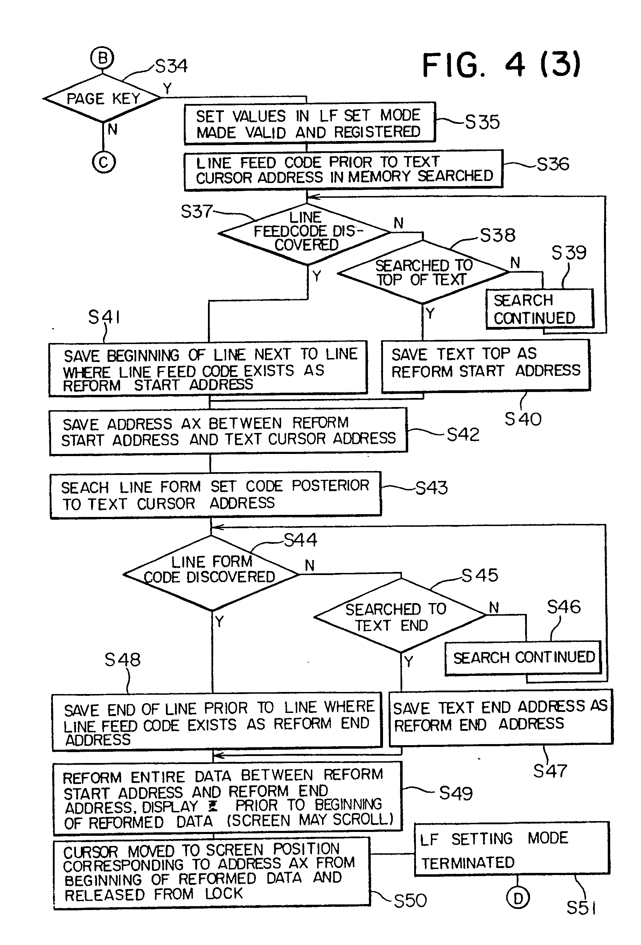

In the word processor 1 equipped with the electric circuit blocks as described above, the processing takes place as shown in the flow chart of Figs. 4 (1) through (3).

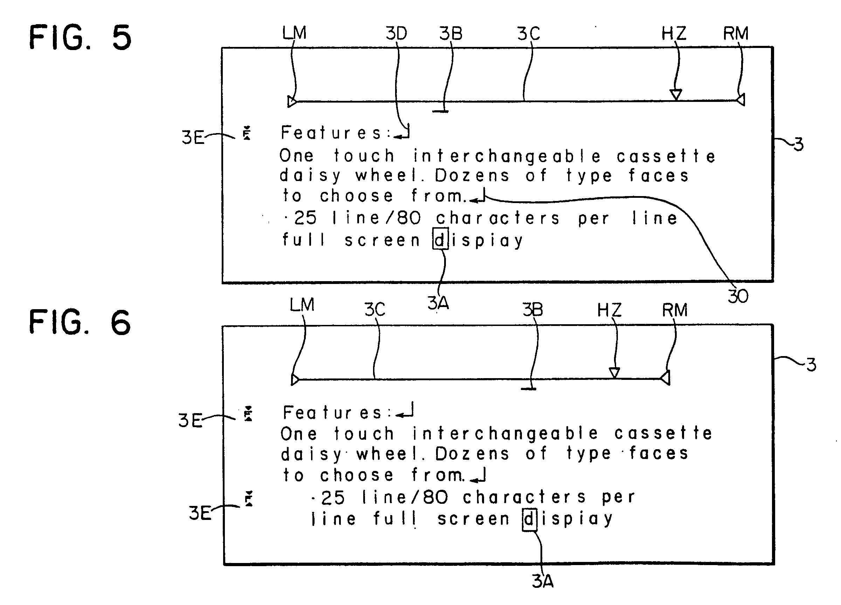

The operation of the preferred embodiment is now described with reference to the flow chart of Fig. 4 (1) through (3) and the illustrative views of the CRT screen on the display section 3 shown in Figs, 5 and 6, wherein Fig. 5 shows the CRT screen before changing the line form setting as described below and Fig. 6 shows that after changing the line form setting.

In the word processor 1, the host computer 13 performs key scanning during text editing, as indicated in the Step S1 (hereinafter referred to simply as S1...S44). It examines in S2 whether the page key (format change key) 2A on the keyboard 2 has been depressed down and if it determines the page key 2A is not down, processing takes place for other keys in S3. If, on the other hand, the page key 2A is found to be down, the text cursor 3A on the CRT screen of display section 3 is brought to standstill in S4 as shown in Fig. 5. Next in S5, the text cursor address in the RAM 19 is saved, while further moving in S6 the current line format information such as left margin LM, right margin RM, scale cursor 3B, hot zone H2, scale line 3C, and format setting code 3E. Control of the line form setting mode is now started in S7. The host computer 13 performs key scanning in S8 to check if the following keys have been depressed. When detecting a key depressed, a corresponding processing for the key depressed is accomplished, then returning to S8.

When the right or left cursor move key 2G or 2H are detected to be down in S9, the scale cursor 3B shown in Fig. 5 is moved to the position shown in Fig. 6 in S10 and the column indicator (COL) not shown is changed accordingly. When the left margin (LM) set key 2B is found to be down as indicated in S11, the left margin LM is set in S12 to move the left margin LM to the position of the scale cursor 3B, with the left margin LM mark ▶ displayed on the display section 3 and the column indicator not shown changed to 1.

When the right margin (RM) set key 2C is depressed as in S14, the right margin RM is set in S14 on the display section 3 as indicated in Fig. 6 to move the right margin RM to the position of the scale cursor 3B, with the right margin RM mark ◄ displayed on the display section 3. When the tab set key 2D is found to be down is S15, the tab is set as indicated in S16 to display the tab mark ▼ not shown at the position of the scale cursor 3B. When the decimal tab set key 2E is found to be down in S17, the decimal tab is set as indicated in S18 to display the decimal tab mark ▽ not shown at the position of the scale cursor 3B. When the hot zone (HZ) set key 2F is found to be down in S19, the hot zone is set as indicated in S20 to display the hot zone mark HZ at the position of the scale cursor 3B. When the line space key 2I is found to be down in S21, the line spacing is changed as indicated in S22 to change the indication of the LED (light emitting diode) of the keyboard 2. Detecting the pitch key 2J to be down in S23 causes changes in pitch, LED indication and scale line 3C on the display section 3. When the tab clear key 2K is found to be down in S25, S26 is processed to determine whether the tab is placed at the position of the scale cursor 3B where the tab clear key 2K has been depressed, and if the scale cursor position is found to coincide with the tab position, the tab is cleared to delete the tab mark or the decimal tab mark. The S8 resumes if the scale cursor position does not coincide the tab position, if the tab all clear key 2L is found to be down in S28, all the tabs and decimal tabs currently set are cleared as indicated in S29, also deleting the tab mark and decimal tab mark.

When the escape (ESC) key 2 is found to be down in S30, the set values in the line form setting mode are canceled as indicated in S31 to call back the line format information saved in S6. S32 releases the text cursor 3A from its locked state and S33 terminates the line form setting mode to return to S1.

When the aforementioned page key 2A is found in S34 to have been depressed again after depressing in S2 as mentioned above, the set values in the current line form setting mode are registered as valid as indicated in S35. S36 then processes to search the line feed code prior to the text cursor address, a line feed mark 3D in Fig. 5, on the RAM 19 and S37 examines whether the line feed code has been discovered. If S37 determines the line feed code (the line feed mark 3D) is not discovered, S38 examines if the search has reached the top of text. If the top of text is not reached according to S38m, the search goes on as indicated in S39 and returns to S37.

When, on the contrary, the top of text is reached according to S38, the text top address is saved as a reform start address in S40. On the other hand, when the line feed code is found in S37, the beginning of the line next to the line where the line feed code exists is saved as a reform start address in S41. Then, the number of addresses AX between the reform starting address and the text cursor address is saved in S42.

S43 then processes to reach the line form set code posterior to the text cursor address, a line form set mark 3F in Fig. 5, on the RAM 19 and S44 examines whether the line form set code has been discovered. If S44 determines the line form set code is not discovered, S45 examines if the search has reached to the end of text. If the end of text is not reached according to S45, the search goes on as indicated in S46 and returns to S44.

when, on the contrary, the end of text is reached according to S45, the text end address is saved as a reform end address in S46. On the other hand, when the line format set code is formed in S44, the end of the line prior to the line where when the line form set code exists is saved as the reform end address in S48.

S49 then processes to reform entire data between the reform start address and the reform end address, with displaying the line form set mark 3E, as shown in Fig. 6 prior prior to the beginning of reformed data. Thereafter, the text cursor 3A is moved from its locked position to the screen display position in S50 corresponding to the member of addresses AX saved in the above S42 from the beginning of the reformed data. The line form setting mode in thus terminated in S51, returning to S1.

According to the above constructed word processor, therefore, the cursor need not be moved to the position at which the change of the format should start, and instead, the format setting operation can take place at any desired position of character data group to which the position whore format change operation is carried out exists. This provides an easy operation and smooth re-start of text editing.

## Claims

1. A word processor comprising a keyboard for inputting character codes and function code, a display device for displaying the input character codes on a screen, and a processing device for preparing a document based upon the input codes and displaying it on said display device, the processing device including designating means for causing a position at which one of the character codes is to be input to be shown on the screen and means for setting a required text format of a defined character data group, characterised in that search means are provided for locating the beginning of the character group in which the position shown by the designating means is present when that character group is to be reformatted, format control means are provided for controlling the format setting operation to be effective from the beginning of said character data group, and reforming means are provided for reformatting at least all said character data group containing said shown position in accordance with the required format as set by the means for setting a required text format.

2. A word processor according to claim 1, wherein the character data group is defined between two line feed codes.

3. A word processor according to claim 1 or 2, wherein said keyboard is provided with a format change key for instructing a format change of the character data group to which the current address of a text cursor comprising the shown portion belongs.

4. A word processor according to claim 3, wherein said processing device further comprises means for saving a number of addresses between reform start address at the beginning of the character data group and text cursor address with said key depressed while bringing said text cursor to a standstill, and means for moving said text cursor to the screen position corresponding to said saved number of addresses from the beginning of the reformed data.

5. A word processor according to claim 3 or 4, wherein said keyboard is further provided with a cancel key for cancelling the instruction for changing the format, and said processing device further comprises means for saving a current format data with said format change key depressed and means for restoring said saved format data when said cancel key is depressed.

6. A word processor according to any preceding claim, wherein said processing device further comprises means for displaying a special code mark at the beginning of said character data group searched by said searching means.

7. A word processor according to any preceding claim, wherein the keyboard comprises at least a plurality of character keys for inputting character data when composing a text, a mode select key for selecting format setting mode, a plurality of keys for inputting data to define a format when the format selecting mode is selected by said mode select key, and a release key for releasing the format setting mode selected by said mode select key.

8. A word processor according to claim 7, wherein memory means are provided for storing the character data and the format data input by said input means ; the format control means is operative for controlling the format of the text composed by the input characters so as to change the format in accordance with the format data ; and display control means are provided for controlling said display device so as to display the text on a display area, while displaying a predetermined indicator on an area of the display device other than said display area, said indicator indicating the positions corresponding to the portions of the text at which the characters are linked with the format data.

## Ansprüche

1. Textverarbeitungsgeräte mit einer Tastatur zum Eingeben von Zeichencodes und einem Funktionscode, einer Anzeigeeinrichtung zum Anzeigen der eingegebenen Zeichencodes auf einem Schirm und einer Verarbeitungseinrichtung zum Vorbereiten eines Schriftstückes auf der Grundlage der eingegebenen Codes und zu seiner Darstellung auf der Anzeigeeinrichtung, wobei die Verarbeitungseinrichtung eine Bezeichnungseinrichtung zum Bewirken, daß eine Position, an der einer der Zeichencodes einzugeben ist, auf dem Schirm angezeigt wird, und eine Einrichtung zum Einstellen eines gewünschten Textformates einer definierten Zeichendatengruppe enthält, dadurch gekennzeichnet, daß eine Sucheinrichtung vorgesehen ist zum Lokalisieren des Anfanges der Zeichengruppe, in der die durch die Bezeichnungseinrichtung gezeigte Position gegenwärtig ist, wenn diese Zeichengruppe zu reformatieren ist, eine Formatsteuereinrichtung vorgesehen ist zum Steuern der Formateinstelltätigkeit zum Wirken von dem Anfang der Zeichendatengruppe an und eine Reformatierungseinrichtung vorgesehen ist zum Reformatieren zumindest all der Datenzeichengruppen, die die gezeigte Position gemäß dem gewünschten Format enthalten, wie es durch die Einrichtung zum Einstellen eines gewünschten Textformates eingestellt ist.

2. Textverarbeitungsgerät nach Anspruch 1, bei dem die Zeichendatengruppe zwischen zwei Zeilenvorschubcodes eingegrenzt ist.

3. Textverarbeitungsgerät nach Anspruch 1 oder 2, bei dem die Tastatur mit einer Formatänderungstaste zum Eingeben einer Formatänderung der Zeichendatengruppe versehen ist, zu der die laufende Adresse eines Textcursors, der den gezeigten Abschnitt enthält, gehört.

4. Textverarbeitungsgerät nach Anspruch 3, bei dem die Verarbeitungseinrichtung weiter eine Einrichtung zum Sichern einer Zahl von Adressen zwischen einer reformatierten Startadresse an dem Anfang der Zeichendatengruppe und einer Textcursoradresse bei gedrückter Taste, während der Cursor zum Anhalten gebracht wird, und eine Einrichtung zum Bewegen des Textcursors zu der Schirmposition, die der gesicherten Zahl von Adressen von dem Anfang der reformatierten Daten entspricht, aufweist.

5. Textverarbeitungsgerät nach Anspruch 3 oder 4, bei dem die Tastatur weiter mit einer Löschtaste zum Löschen der Eingabe zum Ändern des Formates versehen ist und die Verarbeitungseinrichtung weiter eine Einrichtung zum Sichern eines laufenden Formatwertes bei gedrückter Formatänderungstaste und eine Einrichtung zum Wiederherstellen des gesicherten Formatwertes, wenn die Löschtaste gedrückt ist, aufweist.

6. Textverarbeitungsgerät nach einem der vorhergehenden Ansprüche, bei dem die Verarbeitungseinrichtung weiter eine Einrichtung zum Anzeigen einer speziellen Codemarkierung an dem Anfang der Zeichendatengruppe, die von der Sucheinrichtung gesucht ist, aufweist.

7. Textverarbeitungsgerät nach einem der vorhergehenden Ansprüche, bei dem die Tastatur mindestens eine Mehrzahl von Zeichentasten zum Eingeben von Zeichendaten, wenn ein Text zusammengestellt wird, eine Modusauswahltaste zum Auswählen eines Formateinstellmodus, eine Mehrzahl von Tasten zum Eingeben von Daten zum Definieren eines Formates, wenn der Formatauswahlmodus ausgewählt ist durch die Modusauswahltaste, und eine Freigabetaste zum Freigeben des Formatauswahlmodus, der durch die Formatauswahltaste gewählt ist, aufweist.

8. Textverarbeitungsgerät nach Anspruch 7, bei dem eine Speichereinrichtung zum Speichern der Zeichendaten und der Formatdaten vorgesehen ist, die durch die Eingabeeinrichtung eingegeben sind ; die Formatsteuereinrichtung zum Steuern des Formates des durch die eingegebenen Zeichen zusammengesetzten Textes so tätig ist, daß das Format gemäß der Formatdaten geändert wird ; und eine Anzeigesteuereinrichtung zum Steuern der Anzeigeeinrichtung so vorgesehen ist, daß der Text auf eine Anzeigefläche angezeigt wird, während ein vorbestimmter Indikator auf einer Fläche der Anzeigeeinrichtung, die nicht die Anzeigefläche ist, angezeigt wird, wobei der Indikator die Positionen anzeigt, die den Abschnitten des Textes entsprechen, an dem die Zeichen mit den Formatdaten verbunden sind.

**Revendications**

1. Machine de traitement de texte comportant un clavier destiné à entrer des codes de caractère et des codes de fonction, un dispositif d'affichage destiné à afficher les codes de caractère entrés sur un écran, et un dispositif de traitement destiné à préparer un document sur la base des codes entrés et à l'afficher sur le dit dispositif d'affichage, le dispositif de traitement comportant des moyens de désignation destinés à amener une position dans laquelle l'un des codes de caractère doit être entré à être représentée sur l'écran et des moyens destinés à définir un format de texte requis d'un groupe de données de caractère défini, caractérisée en ce que des moyens de recherche sont prévus pour situer le début du groupe de caractère dans lequel la position représentée par les moyens de désignation est présente lorsque ce groupe de caractère doit être reformaté, des moyens de commande de format sont prévus pour commander l'opération de définition de format devant être effective à partir du début du dit groupe de données de caractère, et des moyens de remise en forme sont prévus pour reformater au moins tout le dit groupe de données de caractère contenant la dite position représentée en fonction du format requis tel que défini par les moyens destinés à définir un format de texte requis.

2. Machine de traitement de texte selon la revendication 1, dans laquelle le groupe de données de caractère est défini entre deux codes de saut de ligne.

3. Machine de traitement de texte selon la revendication 1 ou 2, dans laquelle le dit clavier est pourvu d'une touche de changement de format destinée à indiquer un changement de format du groupe de données de caractère auquel l'adresse courante d'un curseur de texte comportant la partie représentée appartient.

4. Machine de traitement de texte selon la revendication 3, dans laquelle le dit dispositif de traitement comporte en outre des moyens destinés à sauvegarder un nombre d'adresses entre l'adresse de commencement de remise en forme au début du groupe de données de caractère et l'adresse de curseur de texte avec la dite touche enfoncée tout en amenant le dit curseur de texte à une immobilisation, et des moyens destinés à déplacer le dit curseur de texte vers la position d'écran correspondant au dit nombre d'adresses depuis le début des données remises en forme.

5. Machine de traitement de texte selon la revendication 3 ou 4, dans laquelle le dit clavier est en outre pourvu d'une touche d'annulation destinée à annuler l'instruction de changement du format, et le dit dispositif de traitement comporte en outre des moyens destinés à sauvegarder des données de format courant avec la dite touche de changement de format enfoncée et des moyens destinés à rappeler les dites données de format sauvegardées lorsque la dite touche d'annulation est enfoncée.

6. Machine de traitement de texte selon l'une quelconque des revendications précédentes, dans laquelle le dit dispositif de traitement comporte en outre des moyens destinés à afficher un repère de code spécial au début du dit groupe de données de caractère recherché par les dits moyens de recherche.

7. Machine de traitement de texte selon l'une quelconque des revendications précédentes, dans laquelle le clavier comporte au moins plusieurs touches de caractère destinées à entrer des données de caractère lors de la composition d'un texte, une touche de sélection de mode destinée à sélectionner un mode de définition de format, plusieurs touches destinées à entrer des données pour définir un format lorsque le mode de sélection de format est sélectionné par la dite touche de sélection de mode, et une touche de libération destinée à libérer le mode de définition de format sélectionné par la dite touche de sélection de mode.

8. Machine de traitement de texte selon la revendication 7, dans laquelle des moyens de mémoire sont prévus afin de mémoriser les données de caractère et les données de format entrées par les dits moyens d'entrée ; les moyens de commande de format sont actifs de façon à commander le format du texte composé par les caractères entrés afin de modifier le format en fonction des données de format ; et des moyens de commande d'affichage sont prévus pour commander le dit dispositif d'affichage afin d'afficher le texte sur une zone d'affichage, tout en affichant un indicateur prédéterminé sur une zone du dispositif d'affichage autre que la dite zone d'affichage, le dit indicateur indiquant les positions correspondant aux parties du texte dans lesquelles les caractères sont liés aux données de format.

# FIG. 1

# FIG. 2

# FIG. 3

## FIG. 4 (I)

START

S1 — KEY SCAN

S2 — PAGE KEY — N → S3 PROCESSING FOR OTHER KEYS (LOCKED)

Y

S4 — TEXT CURSOR OFF (LOCK)

S5 — TEXT CURSOR ADDRESS IN MEMORY SAVED

S6 — CURRENT LF INFORMATION SAVED

S7 — LF SETTING MODE ENTERED

Ⓓ

Ⓒ

S8 — KEY SCAN

S9 — CURSOR MOVE KEY — Y → S10 SCALE CURSOR MOVED COL: INDICATION CHANGED

N

S11 — LM SET KEY — Y → S12 LEFT MARGIN SET: MARK ▶ MOVED TO SCALE CURSOR POSITION COL: CHANGED TO 1

N

S13 — RM SET KEY — Y → S14 RIGHT MARGIN SET: MARK ◀ MOVED TO SCALE CURSOR POSITION

N

S15 — TAB SET KEY — Y → S16 TAB SET: MARK ▼ DISPLAYED AT SCALE CURSOR POSITION

Ⓐ

# FIG. 4 (2)

Ⓐ

S 17 — D TAB SET KEY

Y → DECIMAL TAB SET AND MARK ▽ DISPLAYED AT SCALE CURSOR POSITION — S 18

N ↓

S 19 — HZ SET KEY

Y → HOT ZONE SET AND MARK HZ DISPLAYED AT SCALE CURSOR POSITION — S20

N ↓

S 21 — LINE SPACE KEY

Y → LINE SPACING CHANGED : LED INDICATOR CHANGED — S22

N ↓

S 23 — PITCH KEY

Y → PITCH AND LED INDICATOR CHANGED, SCALE LINE CHANGED ACCORDING TO PITCH — S24

N ↓

S25 — TAB KEY

Y → S26 SCALE CURSOR ON TAB

Y → S 27 TAB OR DECIMAL TAB CLEARED ▼ OR ▽ ON SCALE CURSOR POSITION DELETED

N ↓

N ↓

S28 — TAB ALL CLEAR KEY

Y → TAB OR DECIMAL TAB SET ALL CLEARED ▼, ▽ ALL DELETED — S29

Ⓒ

N ↓

S30 — ESC KEY

Y → SET VALUES IN LF SET MODE CANCELED AND LF INFORMATION SAVED BEFORE RETURNED — S31

N ↓

Ⓑ

TEXT CURSOR RELEASED. — S32

LF SETTING MODE TERMINATED — S33

Ⓓ

# FIG. 4 (3)

```
        (B)  ┌─S34
         │  ╱────────╲    Y      ┌──────────────────────────────┐
         └─◇ PAGE KEY ◇─────────→│ SET VALUES IN LF SET MODE    │─S35
            ╲────────╱           │ MADE VALID AND REGISTERED    │
                │ N              └──────────────────────────────┘
               (C)               ┌──────────────────────────────┐
                                 │ LINE FEED CODE PRIOR TO TEXT  │─S36
                                 │ CURSOR ADDRESS IN MEMORY SEARCHED│
                                 └──────────────────────────────┘
```

S37 — LINE FEEDCODE DISCOVERED

N → S38 SEARCHED TO TOP OF TEXT

N → S39 SEARCH CONTINUED

**S41** SAVE BEGINNING OF LINE NEXT TO LINE WHERE LINE FEED CODE EXISTS AS REFORM START ADDRESS

SAVE TEXT TOP AS REFORM START ADDRESS — S40

SAVE ADDRESS AX BETWEEN REFORM START ADDRESS AND TEXT CURSOR ADDRESS —S42

SEACH LINE FORM SET CODE POSTERIOR TO TEXT CURSOR ADDRESS —S43

S44 — LINE FORM CODE DISCOVERED

N → S45 SEARCHED TO TEXT END

N → S46 SEARCH CONTINUED

**S48** SAVE END OF LINE PRIOR TO LINE WHERE LINE FEED CODE EXISTS AS REFORM END ADDRESS

SAVE TEXT END ADDRESS AS REFORM END ADDRESS — S47

REFORM ENTIRE DATA BETWEEN REFORM START ADDRESS AND REFORM END ADDRESS, DISPLAY ⚔ PRIOR TO BEGINNING OF REFORMED DATA (SCREEN MAY SCROLL) —S49

CURSOR MOVED TO SCREEN POSITION CORRESPONDING TO ADDRESS AX FROM BEGINNING OF REFORMED DATA AND RELEASED FROM LOCK —S50

LF SETTING MODE TERMINATED

(D) S51

FIG. 5

FIG. 6